(19) **Europäisches Patentamt European Patent Office Office européen des brevets**

(11) **EP 4 671 298 A1**

(12) **EUROPEAN PATENT APPLICATION**
published in accordance with Art. 153(4) EPC

(43) Date of publication:
**31.12.2025 Bulletin 2026/01**

(21) Application number: **24760550.4**

(22) Date of filing: **21.02.2024**

(51) International Patent Classification (IPC):
**C08G 63/16** (2006.01)   **C08G 63/85** (2006.01)
**C08K 5/51** (2006.01)

(52) Cooperative Patent Classification (CPC):
**C08G 63/16; C08G 63/85; C08K 5/51**

(86) International application number:
**PCT/KR2024/002205**

(87) International publication number:
**WO 2024/177361 (29.08.2024 Gazette 2024/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.02.2023 KR 20230023776**
**20.02.2024 KR 20240024326**

(71) Applicant: **LG CHEM, LTD.**
**Yeongdeungpo-gu**
**Seoul 07336 (KR)**

(72) Inventors:
• **PARK, Se Yeol**
  **Daejeon 34122 (KR)**
• **HWANG, Yoontae**
  **Daejeon 34122 (KR)**
• **YU, Sung Min**
  **Daejeon 34122 (KR)**
• **KIM, Su Hwa**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD FOR PREPARING POLYBUTYLENEADIPATETEREPHTHALATE AND POLYBUTYLENEADIPATETEREPHTHALATE**

(57)   The present disclosure relates to a method for preparing polybutylene adipate terephthalate, and polybutylene adipate terephthalate.

EP 4 671 298 A1

**Description**

[TECHNICAL FIELD]

Cross-reference to Related Application(s)

This application claims the benefits of Korean Patent Applications No. 10-2023-0023776 filed on February 22, 2023 and No. 10-2024-0024326 filed on February 20, 2024 with the Korean Intellectual Property Office, the disclosure of which is incorporated herein by reference in its entirety.

The present disclosure relates to a method for preparing polybutylene adipate terephthalate, and polybutylene adipate terephthalate.

[BACKGROUND OF ART]

Polyester-based resins have excellent mechanical and chemical properties, so they have been used for many purposes, for example, in fields such as drinking water containers, medical products, food packaging, food containers, sheets, films, and automobile molded products.

Among them, polybutylene adipate terephthalate (PBAT) is a soft, biodegradable polyester. As environmental regulations have recently become more stringent, PBAT has been in the spotlight as an alternative material that can replace polyolefin polymers, which were mainly used in films such as food packaging materials.

Polybutylene adipate terephthalate is processed into films, etc. by extrusion or injection molding. If the acid value of polybutylene adipate terephthalate is too high, product quality problems may occur during processing processes such as extrusion or injection due to insufficient mechanical strength.

In addition, polybutylene adipate terephthalate is mainly used for purposes such as transparent films, but there is a problem in that discoloration to red or yellow occurs in the produced film, deteriorating the appearance of the product.

As such, the acid value and color characteristics of polybutylene adipate terephthalate are very important, and the acid value and color characteristics of polybutylene adipate terephthalate can be considered to be in a trade-off relationship. Therefore, there is a need for the development of polybutylene adipate terephthalate that has an appropriate acid value, does not cause discoloration, and can simultaneously satisfy excellent mechanical properties and appearance.

[DETAILED DESCRIPTION OF THE INVENTION]

[Technical Problem]

In the present disclosure, there is provided polybutylene adipate terephthalate with sufficient mechanical properties to prevent problems during processing by having an acid value in a specific range, while having excellent appearance such as color.

In the present disclosure, there is also provided a method for preparing the polybutylene adipate terephthalate.

[Technical Solution]

In the present disclosure, there is provided a method for preparing polybutylene adipate terephthalate including: a first step of preparing a polybutylene adipate terephthalate prepolymer by polymerizing butanediol, adipic acid, and terephthalic acid in the presence of a titanium (Ti)-based polymerization catalyst; and

a second step of preparing a polybutylene adipate terephthalate polymer by polycondensation of the polybutylene adipate terephthalate prepolymer in the presence of a titanium (Ti)-based polycondensation catalyst and a phosphorus (P)-based thermal stabilizer,

wherein a molar ratio of phosphorus and titanium used in the first and second steps satisfies the following Equation 1:

[Equation 1]

$$0.65 \leq P/Ti \leq 1$$

According to one embodiment of the present disclosure, in the above preparation method, the 1,4-butanediol may be included in an amount of about 100 to about 250 parts by weight based on 100 parts by weight of the adipic acid.

According to another embodiment of the present disclosure, in the above preparation method, the terephthalic acid may be included in an amount of about 50 to about 150 parts by weight based on 100 parts by weight of the adipic acid.

According to another embodiment of the present disclosure, in the above preparation method, the titanium (Ti)-based polymerization catalyst may be included in an amount of about 0.001 to about 10 parts by weight based on 100 parts by weight of the adipic acid.

According to another embodiment of the present disclosure, in the above preparation method, the titanium (Ti)-based polymerization catalyst may be at least one selected from the group consisting of titanium methoxide, titanium ethoxide, titanium propoxide, titanium isopropoxide, titanium butoxide, titanium isobutoxide, and titanium citrate.

According to another embodiment of the present disclosure, in the above preparation method, the titanium (Ti)-based polycondensation catalyst may be the same as or different from the titanium (Ti)-based polymerization catalyst.

According to another embodiment of the present disclosure, in the above preparation method, the titanium (Ti)-based polycondensation catalyst may be included in an amount of about 0.001 to about 0.5 parts by weight based on 100 parts by weight of the polybutylene adipate terephthalate prepolymer.

According to another embodiment of the present disclosure, in the above preparation method, the phosphorus (P)-based heat stabilizer may include at least one selected from the group consisting of phosphoric acid, phosphorous acid, trialkyl phosphate, and trialkylphosphonoacetate.

According to another embodiment of the present disclosure, in the above preparation method, the phosphorus (P)-based heat stabilizer may be included in an amount of about 0.001 to about 0.1 parts by weight based on 100 parts by weight of the polybutylene adipate terephthalate prepolymer.

According to another embodiment of the present disclosure, the polybutylene adipate terephthalate polymer may have a weight average molecular weight of about 70,000 to about 200,000 g/mol.

According to another embodiment of the present disclosure, the polybutylene adipate terephthalate polymer may have an acid value (mmol/kg) of about 5 to about 30.

According to another embodiment of the present disclosure, the polybutylene adipate terephthalate polymer may have a b* value in color of about 0 to about 30.

According to another embodiment of the present disclosure, the polybutylene adipate terephthalate polymer may satisfy the following Formula 1:

[Formula 1]

$$\text{Acid value} + b^* \leq 30$$

In Formula 1, the acid value is an acid value (mmol/kg) of the polybutylene adipate terephthalate polymer, and b* is the b* value in color of the polybutylene adipate terephthalate polymer.

In the present disclosure, there is provided polybutylene adipate terephthalate having a weight average molecular weight of 70,000 to 200,000 g/mol and satisfying the following Formula 1:

[Formula 1]

$$\text{Acid value} + b^* \leq 30$$

In Formula 1, the acid value is an acid value (mmol/kg) of the polybutylene adipate terephthalate polymer, and b* is the b* value in color of the polybutylene adipate terephthalate polymer.

In the present disclosure, the terms "the first", "the second", and the like are used to describe a variety of components, and these terms are merely employed to distinguish a certain component from other components.

The terminology used herein is for the purpose of describing particular embodiments only and is not intended to limit the invention.

The singular forms are intended to include the plural forms as well, unless the context clearly indicates otherwise.

It will be further understood that the terms "include", "have", or "possess" when used in this specification, specify the presence of stated features, numbers, steps, components, or combinations thereof, but do not preclude the presence or addition of one or more other features, numbers, steps, components, or combinations thereof.

Also, as used herein, when a layer or an element is mentioned to be formed "on" layers or elements, the layer or element may be directly formed on the layers or elements, or other layers or elements may be additionally formed between the layers, on a subject, or on a substrate.

As the present invention can be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.

Hereinafter, the present invention will be described in detail.

According to one embodiment of the present disclosure, there is provided a method for preparing polybutylene adipate terephthalate including: a first step of preparing a polybutylene adipate terephthalate prepolymer by polymerizing butanediol, adipic acid, and terephthalic acid in the presence of a titanium (Ti)-based polymerization catalyst; and a second step of preparing a polybutylene adipate terephthalate polymer by polycondensation of the polybutylene adipate terephthalate prepolymer in the presence of a titanium (Ti)-based polycondensation catalyst and a phosphorus (P)-based thermal stabilizer,

wherein a molar ratio of phosphorus and titanium used in the first and second steps satisfies the following Equation 1:

[Equation 1]

$$0.65 \leq P/Ti \leq 1$$

The present inventors have discovered that when the ratio of phosphorus and titanium used in the polycondensation step is adjusted to a specific range in the method for preparing a polybutylene adipate terephthalate polymer including a step of preparing a polybutylene adipate terephthalate prepolymer by polymerizing butanediol, adipic acid, and terephthalic acid, and a step of preparing a polybutylene adipate terephthalate polymer by polycondensation of the prepolymer, it is possible to produce a polybutylene adipate terephthalate polymer that has an appropriate acid value, does not cause discoloration, and simultaneously satisfies excellent mechanical properties and appearance, thereby completing the present invention.

Generally, high molecular weight polyester is produced by preparing a prepolymer through an esterification reaction of a diol compound and a dicarboxylic acid-based compound in the presence of a catalyst to form an ester bond, transferring the prepolymer to a separate reactor, and then performing a polycondensation reaction by adding a polycondensation catalyst.

Preparation of prepolymer

The prepolymer refers to a polymer with a relatively low degree of polymerization whose polymerization reaction has been stopped at an intermediate stage.

In one embodiment, the prepolymer refers to a polymer with a relatively low degree of polymerization obtained by performing an esterification reaction on a monomer mixture containing 1,4-butanediol, adipic acid, and terephthalic acid in the presence of a titanium (Ti)-based polymerization catalyst.

In the preparation of the prepolymer, an initial polymer chain may be formed around the catalyst.

According to one embodiment of the present disclosure, the 1,4-butanediol may be included in an amount of about 100 to about 250 parts by weight based on 100 parts by weight of the adipic acid in the preparation method.

This is the entire amount of 1,4-butanediol required for PBAT synthesis. 1,4-butane diol is a reactant and can also function as a solvent or dispersant for dispersing catalysts, etc. Conventionally, for the uniformity and stability of the catalyst, only a portion of the 1,4-butane diol to be reacted may be supplied during the polymerization process, and the remaining amount may be supplied during a later reaction.

In this respect, the 1,4-butanediol may be included in an amount of about 150 to about 250 parts by weight, or about 180 to 220 parts by weight, based on 100 parts by weight of adipic acid in the monomer mixture.

According to another embodiment of the present disclosure, the terephthalic acid may be included in an amount of about 50 to about 150 parts by weight, or about 80 to about 120 parts by weight based on 100 parts by weight of the adipic acid in the preparation method.

Due to its aromatic ring structure, terephthalic acid may affect crystallinity of the polymer. However, polymers manufactured within the above range can have excellent mechanical properties and biodegradability.

According to another embodiment of the present disclosure, the titanium (Ti)-based polymerization catalyst may be included in an amount of about 0.001 to about 10 parts by weight based on 100 parts by weight of the adipic acid in the preparation method.

Within the above range, the esterification reaction of the monomer mixture can be appropriately mediated.

If the amount of catalyst input is too small, the polymerization time may be prolonged and productivity may decrease. If the amount of catalyst input is too large, the polymerization time may be shortened, but possibility of discoloration of the final PBAT increases, so the amount of heat stabilizer must be increased in proportion to the amount of catalyst input, and the manufacturing cost increases.

Considering this tendency, the amount of catalyst input in the catalyst mixture can be adjusted. For example, the catalyst in the catalyst mixture may be used in an amount of 0.001 parts by weight or more, 0.005 parts by weight, or 0.01 parts by weight or more, and 10 parts by weight or less, 5 parts by weight or less, or 0.1 part by weight or less based on 100 parts by weight of adipic acid in the monomer mixture.

According to another embodiment of the present disclosure, the titanium (Ti)-based polymerization catalyst may be at least one selected from the group consisting of titanium methoxide, titanium ethoxide, titanium propoxide, titanium isopropoxide, titanium butoxide, titanium isobutoxide, and titanium citrate.

The step of preparing the prepolymer may be performed at a temperature of about 150 to about 350 °C for about 10 to about 240 minutes.

For example, the step of preparing the prepolymer may be performed at about 150 °C or higher, about 170 °C or higher, about 190 °C or higher, or about 210 °C or higher, and about 350 °C or lower, about 320 °C or lower, about 290 °C or lower, or about 250 °C or lower. In addition, it may be performed for 10 minutes or more, 15 minutes or more, 20 minutes or more, or 25 minutes or more, and about 240 minutes or less, about 120 minutes or less, about 90 minutes or less, about 60 minutes or less, or about 40 minutes or less.

In the step of preparing the prepolymer, nitrogen gas may be injected into the reactor. Specifically, when nitrogen gas is injected, water generated as a by-product is quickly removed, thereby suppressing the reverse reaction caused by water. Therefore, the polymerization conversion rate of monomers can be improved and the molecular weight of the polymer can be increased.

For example, the nitrogen gas may be injected at about 0.001 ml/min or more, about 0.01 ml/min or more, 0.02 ml/min or more, or about or 0.05 ml/min or more, and about 100 ml/min or less, about 50 ml/min or less, about 10 ml/min or less, or about 5 ml/min or less.

In the step of preparing the prepolymer, about 0.1 to about 1 part by weight of a cross-linking agent or branching agent may be added based on 100 parts by weight of adipic acid in the monomer mixture.

When an esterification reaction is performed by adding a cross-linking agent, an internally cross-linked prepolymer can be produced, and mechanical properties can be improved in the final polymer PBAT after polycondensation.

The cross-linking agent is a low-molecular-weight compound containing 3 or more hydroxy groups in the molecule, or 3 or more carboxy groups in the molecule, and may be, for example, an erythritol-based compound, a glycerol-based compound, or citric acid.

Polycondensation

Then, the polybutylene adipate terephthalate prepolymer prepared in the above process is polycondensed to produce a polybutylene adipate terephthalate polymer.

In the case of continuous production, the polybutylene adipate terephthalate prepolymer is transferred to a separate polycondensation reactor, and then polycondensation may be performed. In the case of batch production, the polybutylene adipate terephthalate prepolymer may be transferred to another location, or the polycondensation may be performed by only controlling the reaction conditions in the original reactor.

According to another embodiment of the present disclosure, the titanium (Ti)-based polycondensation catalyst may be the same as or different from the titanium (Ti)-based polymerization catalyst in the above preparation method.

In the polycondensation reaction, the polymer chains are connected through an esterification reaction between the hydroxy groups and carboxyl groups at the ends of the polybutylene adipate terephthalate prepolymer. Therefore, the catalyst used in the polycondensation process, that is, the titanium (Ti)-based polycondensation catalyst, may be the same as or different from the catalyst used in the esterification reaction for producing the prepolymer, that is, the titanium (Ti)-based polymerization catalyst described above.

However, even if the same type of catalyst is used, an additional catalyst is added in the polycondensation reaction of the prepolymer in addition to the amount of catalyst used in the step of preparing the prepolymer.

There is a high possibility that the activity of the initially added catalyst, that is, the titanium (Ti)-based polymerization catalyst, will decrease during the prepolymer production step. For example, titanium, the central metal component of the catalyst, may react with water, a by-product of the esterification reaction, to form titanium oxide, and other functional groups may be substituted for the alkoxide site of titanium alkoxide.

Therefore, during the polycondensation reaction, a separate catalyst must be added immediately before the polycondensation reaction.

According to another embodiment of the present disclosure, the titanium (Ti)-based polycondensation catalyst may be included in an amount of about 0.001 to about 0.5 parts by weight based on 100 parts by weight of the polybutylene adipate terephthalate prepolymer in the above preparation method.

In addition, separately from the addition of the polycondensation catalyst, a heat stabilizer is added. The heat stabilizer is intended to suppress discoloration of the final polybutylene adipate terephthalate polymer, and can be added simultaneously with the polycondensation catalyst, or before or after the addition of the polycondensation catalyst.

According to another embodiment of the present disclosure, the phosphorus (P)-based heat stabilizer may include at least one selected from the group consisting of phosphoric acid, phosphorous acid, trialkyl phosphate, and trialkylphosphonoacetate in the above preparation method.

According to another embodiment of the present disclosure, the phosphorus (P)-based heat stabilizer may be included in an amount of about 0.001 to about 0.1 parts by weight based on 100 parts by weight of the polybutylene adipate terephthalate prepolymer in the above preparation method.

The polycondensation reaction may include the steps of: raising the temperature of the reactor containing the prepolymer until it reaches the polycondensation temperature, specifically in the range of about 150 to about 350 °C; reducing the pressure of the reactor until it reaches 0.1 to 0.00001 atm after raising the temperature; and terminating the reaction by confirming the degree of polycondensation while maintaining the pressure and temperature after the pressure reduction.

For example, the temperature of the reactor containing the prepolymer may be raised until it reaches a temperature of about 150 °C or higher, about 170 °C or higher, about 190 °C or higher, or about 210 °C or higher, and about 350 °C or lower, about 320 °C or lower, about 290 °C or lower, or about 250 °C or lower.

About 1 to about 10 minutes after reaching the above temperature, the pressure is reduced. At this time, the pressure of the reactor may be reduced until it reaches a pressure of about 0.00001 atm or more, about 0.00005 atm or more, about 0.0001 atm or more, or about 0.0002 atm or more, and about 0.1 atm or less, about 0.05 atm or less, about 0.03 atm or less, or about 0.01 atm or less.

After the pressure reduction, the reaction can be performed while maintaining the pressure and temperature. In addition, depending on the degree of polycondensation, the reaction can be terminated after confirming that the desired molecular weight has been reached.

The molecular weight can be confirmed by collecting the results inside the reactor, but generally, it can be confirmed by the torque load of the stirrer installed inside the reactor.

The reaction time is not particularly limited, but the reaction can be terminated about 2 hours or more, about 2.2 hours or more, about 2.4 hours or more, or about 3 hours or more and about 8 hours or less, about 7.5 hours or less, about 7 hours or less, or about 6 hours after the start of the reaction.

According to another embodiment of the present disclosure, the weight average molecular weight of the polybutylene adipate terephthalate polymer prepared according to the method of the present disclosure may be about 70,000 to about 200,000 g/mol, preferably about 70,000 or more, or about 80,000 g/mol or more, and about 200,000 g/mol or less, or about 150,000 g/mol or less.

According to another embodiment of the present disclosure, the polybutylene adipate terephthalate polymer prepared according to the method of the present disclosure may have the acid value (mmol/kg) of about 5 to about 30, preferably about 5 or more, or about 7 or more, and about 30 or less, about 25 or less, or about 20 or less.

The acid value refers to free acid radicals remaining in the polymer chain when some acid functional groups do not react during the esterification reaction between a dicarboxylic acid and a diol. If the acid value is too high, the free acid radicals can promote hydrolysis over time, causing various problems such as a decrease in molecular weight of the polymer or deterioration of mechanical properties of the polymer.

According to another embodiment of the present disclosure, the b* value in color of the polybutylene adipate terephthalate polymer prepared according to the method of the present disclosure may be about 0 to about 30, preferably about 0 or more, more than about 0, about 3 or more, or about 5 or more, and about 30 or less, about 25 or less, or about 20 or less, so that discoloration hardly occurs and optical properties can be excellent.

When the b* value in color is too high, the polymer appears yellow, making it difficult to use the polymer in applications requiring excellent optical properties.

According to another embodiment of the present disclosure, the polybutylene adipate terephthalate polymer may satisfy the following Formula 1.

[Formula 1]

$$\text{Acid value} + b^* \leq 30$$

In Formula 1, the acid value is an acid value (mmol/kg) of the polybutylene adipate terephthalate polymer, and b* is the b* value in color of the polybutylene adipate terephthalate polymer.

As described above, the acid value and color characteristics of polybutylene adipate terephthalate are very important, and the acid value and color characteristics of polybutylene adipate terephthalate can be considered to be in a trade-off relationship. Therefore, it is very difficult to obtain polybutylene adipate terephthalate that has an appropriate acid value to ensure processability, but is not discolored.

However, according to an embodiment of the present disclosure, when the ratio of the titanium (Ti)-based polycondensation catalyst and the phosphorus (P)-based thermal stabilizer added in the polycondensation process is maintained to satisfy the P/Ti molar ratio of 0.65 to 1, it is possible to provide polybutylene adipate terephthalate with an appropriate acid value and a low b* value in color without coloring or discoloration. In other words, the polybutylene adipate terephthalate can satisfy both excellent mechanical properties and appearance.

Meanwhile, according to another aspect of the present disclosure, there is provided polybutylene adipate terephthalate, which has a weight average molecular weight of 70,000 to 200,000 g/mol and satisfies the following Formula 1.

[Formula 1]

$$\text{Acid value} + b^* \leq 30$$

In Formula 1, the acid value is an acid value (mmol/kg) of the polybutylene adipate terephthalate polymer, and b* is the b* value in color of the polybutylene adipate terephthalate polymer.

[ADVANTAGEOUS EFFECTS]

According to the preparation method of the present disclosure, there is provided polybutylene adipate terephthalate having an appropriate acid value and a low b* value in color without coloring or discoloration, that is, simultaneously satisfying excellent mechanical properties and appearance.

[DETAILED DESCRIPTION OF THE EMBODIMENTS]

Hereinafter, the function and effect of the present invention will be described in more detail through specific examples. However, these examples are for illustrative purposes only, and the invention is not intended to be limited by these examples.

<Examples>

**Example 1**

**Preparation of prepolymer**

2,372g of 1,4-butanediol, 1,538g of adipic acid, and 1,614g of terephthalic acid as a monomer, 0.741g of pentaerythritol as a cross-linking agent, and 2.601g of titanium citrate (Ti content: 4.9 wt%) as a titanium (Ti)-based polymerization catalyst were placed in a polymerization reactor, the temperature was raised to about 230 °C, and the polymerization reaction (esterification reaction) was performed for about 2 hours under a pressure of 400 mbar while maintaining the temperature to obtain a polybutylene adipate terephthalate prepolymer.
(Molecular weight of prepolymer: 3,700g/mol)

**Polycondensation reaction**

In the reactor where the polybutylene adipate terephthalate prepolymer was obtained, 4.595 g of titanium citrate (Ti content: 4.9 wt%), the same as the polymerization catalyst, as a titanium (Ti)-based polycondensation catalyst, and 1.076 g of triethylphosphonoacetate (about 35 ppm based on the phosphorus atom content in PBAT polymer to be obtained) as a phosphorus (P)-based heat stabilizer were additionally added, and stirred at 60 rpm for about 10 minutes.

After stirring, the temperature of the reactor was raised to about 240 °C. When the temperature of the reactor reached about 240 °C, the pressure was reduced so that the internal pressure of the reactor reached about 1 mbar about 5 minutes after reaching the temperature. Then, polycondensation was performed while maintaining the reduced pressure and continuing stirring at about 60 rpm.

The reaction was stopped when the torque of the stirrer reached about 0.5 Ampere, and a polybutylene adipate terephthalate polymer was obtained.

**Examples 2 to 4 and Comparative Examples 1 to 6**

A polybutylene adipate terephthalate polymer was obtained in the same manner as in Example 1, except that the P/Ti ratio was changed by varying the amount of titanium (Ti)-based polycondensation catalyst and phosphorus (P)-based thermal stabilizer in the polycondensation step.

Reaction conditions are summarized in Table 1 below.

[Table 1]

| | Titanium (Ti)-based polycondensation catalyst (g) | Phosphorus (P)-based thermal stabilizer (g) | P/Ti (molar ratio) | Reaction time (min) |
|---|---|---|---|---|
| Example 1 | 4.595 | 1.076 | 0.65 | 244 |
| Example 2 | 3.468 | 1.076 | 0.77 | 244 |
| Example 3 | 2.861 | 1.076 | 0.86 | 310 |
| Example 4 | 2.167 | 1.076 | 0.98 | 407 |
| Comparative Example 1 | 5.202 | 1.076 | 0.6 | 202 |
| Comparative Example 2 | 6.069 | 1.076 | 0.54 | 186 |
| Comparative Example 3 | 1.734 | 1.076 | 1.08 | X* |
| Comparative Example 4 | 3.468 | 1.538 | 1.1 | X* |
| Comparative Example 5 | 4.595 | 1.718 | 1.038 | 462 |
| Comparative Example 6 | 4.595 | 1.043 | 0.63 | 238 |
| X*: As the reaction proceeded for about 360 minutes, the torque load of the stirrer in the reactor did not reach about 0.5 Ampere, so polycondensation did not proceed sufficiently. | | | | |

Physical properties of the polybutylene adipate terephthalate polymer obtained in Examples and Comparative Examples were measured by the following method.

## Measurement of weight average molecular weight

After dissolving the polymer to be measured in chloroform at a concentration of 1 mg/ml, the solution was put into a gel permeation chromatography (GPC, PL GPC220, Agilent Technologies) instrument to measure the molecular weight. At this time, polystyrene was used as the standard polymer.

## Measurement of acid value

The sample was dissolved in a O-cresol:Chloroform mixed solution (weight ratio of 1:1), and 1-2 drops of an aqueous solution containing 0.1 wt% Phenol red was used as an indicator.

A 0.1N potassium hydroxide (KOH)/ethanol solution was titrated using a micropipette, and the acid value was measured using Mathematical equation 1 below.

$$[\text{Mathematical equation 1}] \quad \text{Acid value (mg KOH/g)} = (V-V0)*M*F*1000/W$$

V: Volume of KOH/Ethanol solution consumed for titration of sample (mL)
V0: Volume of KOH/Ethanol solution consumed for a blank titration (mL)
M: Molarity of KOH/Ethanol solution (0.1M/L)
W: Mass of sample (g)
F: Titer of KOH/Ethanol solution

The acid value is the number of milligrams (mg) of KOH required to neutralize free fatty acids contained in 1 g of oil. $RCOOH + KOH \rightarrow RCOOK + H_2O$. In other words, the acid value measures the amount of free fatty acids not bound in the form of glycerides.

In particular, in the esterification reaction, it is a measure of the degree of reaction and refers to the amount of KOH required to neutralize carboxyl groups contained in 1 g of polymer. The larger the number, the worse the reaction rate.

**Measurement of b* value in color**

Pelletized PBAT was placed in a cylindrical transparent glass sample bottle with a diameter of 60 mm and a height of 50 mm, and Color L\*/a\*/b\*/YI values were measured using a spectrophotometer (product name: ColorFlex EZ) according to CIE 15:2004 standards.

The measurement results are summarized in Table 2 below.

[Table 2]

|  | Weight average molecular weight (g/mol) | Acid value (mmol/kg) | b* | Formula 1 |
|---|---|---|---|---|
| Example 1 | 106k | 9 | 19.5 | 28.5 |
| Example 2 | 105k | 12 | 16.0 | 28 |
| Example 3 | 107k | 16 | 8.2 | 24.2 |
| Example 4 | 110k | 24 | 5.1 | 29.1 |
| Comparative Example 1 | 105k | 7 | 30.5 | 36.4 |
| Comparative Example 2 | 103k | 5 | 36.1 | 41.1 |
| Comparative Example 3 | 54k | 41 | 1.3 | 42.3 |
| Comparative Example 4 | 34k | 273 | 12.8 | 285.8 |
| Comparative Example 5 | 98k | 42 | 4.6 | 46.6 |
| Comparative Example 6 | 106k | 8 | 35.4 | 43.4 |

Referring to Table 2 above, Comparative Examples 1 and 2 had excessively high b* value in color, causing a problem in appearance. In Comparative Examples 3 and 4, the molecular weight was almost half or less than that of Examples, polycondensation or reaction for increasing the molecular weight was not properly carried out, and the acid value was found to be excessively high. In addition, Comparative Example 5 had a problem of lower molecular weight and higher acid value compared to Examples, and Comparative Example 6 had excessively high b* value in color, causing a problem in appearance.

However, polybutylene adipate terephthalate prepared according to an embodiment of the present disclosure had a relatively low acid value with a low b* value in color, so it could have excellent mechanical properties and durability, and at the same time could achieve excellent optical properties.

**Claims**

1.   A method for preparing polybutylene adipate terephthalate comprising:

a first step of preparing a polybutylene adipate terephthalate prepolymer by polymerizing butanediol, adipic acid, and terephthalic acid in the presence of a titanium (Ti)-based polymerization catalyst; and
a second step of preparing a polybutylene adipate terephthalate polymer by polycondensation of the polybutylene adipate terephthalate prepolymer in the presence of a titanium (Ti)-based polycondensation catalyst and a phosphorus (P)-based thermal stabilizer,
wherein a molar ratio of phosphorus and titanium used in the first and second steps satisfies the following Equation 1:

[Equation 1]

$$0.65 \leq P/Ti \leq 1$$

2.   The method for preparing polybutylene adipate terephthalate of Claim 1,
wherein the 1,4-butanediol is included in an amount of 100 to 250 parts by weight based on 100 parts by weight of the adipic acid.

3. The method for preparing polybutylene adipate terephthalate of Claim 1,
wherein the terephthalic acid is included in an amount of 50 to 150 parts by weight based on 100 parts by weight of the adipic acid.

4. The method for preparing polybutylene adipate terephthalate of Claim 1,
wherein the titanium (Ti)-based polymerization catalyst is included in an amount of 0.001 to 10 parts by weight based on 100 parts by weight of the adipic acid.

5. The method for preparing polybutylene adipate terephthalate of Claim 1,
wherein the titanium (Ti)-based polymerization catalyst is at least one selected from the group consisting of titanium methoxide, titanium ethoxide, titanium propoxide, titanium isopropoxide, titanium butoxide, titanium isobutoxide, and titanium citrate.

6. The method for preparing polybutylene adipate terephthalate of Claim 1,
wherein the titanium (Ti)-based polycondensation catalyst is the same as or different from the titanium (Ti)-based polymerization catalyst.

7. The method for preparing polybutylene adipate terephthalate of Claim 1,
wherein the titanium (Ti)-based polycondensation catalyst is included in an amount of 0.001 to 0.5 parts by weight based on 100 parts by weight of the polybutylene adipate terephthalate prepolymer.

8. The method for preparing polybutylene adipate terephthalate of Claim 1,
wherein the phosphorus (P)-based heat stabilizer includes at least one selected from the group consisting of phosphoric acid, phosphorous acid, trialkyl phosphate, and trialkylphosphonoacetate.

9. The method for preparing polybutylene adipate terephthalate of Claim 1,
wherein the phosphorus (P)-based heat stabilizer is included in an amount of 0.001 to 0.1 parts by weight based on 100 parts by weight of the polybutylene adipate terephthalate prepolymer.

10. The method for preparing polybutylene adipate terephthalate of Claim 1,
wherein the polybutylene adipate terephthalate polymer has a weight average molecular weight of 70,000 to 200,000 g/mol.

11. The method for preparing polybutylene adipate terephthalate of Claim 1,
wherein the polybutylene adipate terephthalate polymer has an acid value (mmol/kg) of 5 to 30.

12. The method for preparing polybutylene adipate terephthalate of Claim 1,
wherein the polybutylene adipate terephthalate polymer has a b* value in color of 0 to 30.

13. The method for preparing polybutylene adipate terephthalate of Claim 1,

wherein the polybutylene adipate terephthalate polymer satisfies the following Formula 1:

[Formula 1]

$$\text{Acid value} + b^* \leq 30$$

In Formula 1, the acid value is an acid value (mmol/kg) of the polybutylene adipate terephthalate polymer, and b* is the b* value in color of the polybutylene adipate terephthalate polymer.

14. Polybutylene adipate terephthalate having a weight average molecular weight of 70,000 to 200,000 g/mol and satisfying the following Formula 1:

[Formula 1]

$$\text{Acid value} + b^* \leq 30$$

In Formula 1, the acid value is an acid value (mmol/kg) of the polybutylene adipate terephthalate polymer, and b* is the b* value in color of the polybutylene adipate terephthalate polymer.

## INTERNATIONAL SEARCH REPORT

| International application No. |
| --- |
| **PCT/KR2024/002205** |

| A. | CLASSIFICATION OF SUBJECT MATTER |
| --- | --- |

**C08G 63/16**(2006.01)i; **C08G 63/85**(2006.01)i; **C08K 5/51**(2006.01)i

According to International Patent Classification (IPC) or to both national classification and IPC

| B. | FIELDS SEARCHED |
| --- | --- |

Minimum documentation searched (classification system followed by classification symbols)

C08G 63/16(2006.01); C08G 63/00(2006.01); C08G 63/18(2006.01); C08G 63/78(2006.01); C08G 63/80(2006.01); C08L 67/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리부틸렌아디페이트테레프탈레이트(polybutyleneadipatet erephthalate), 부탄디올(butanediol), 아디프산(adipic acid), 테레프탈산(terephthalic acid), 티타늄(titanium), 촉매(catalyst), 중합(polymerization), 열 안정제(heat stabilizing agent), 인산(phosphoric acid), 분자량(molecular weight), 산가(acid number)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2014-0031010 A (SAMSUNG FINE CHEMICALS CO., LTD. et al.) 12 March 2014 (2014-03-12) See paragraphs [0013]-[0050], [0089]-[0091], [0093]-[0097], [0100], [0101] and [0122]-[0153]. | 14 |
| Y | | 1-13 |
| Y | KR 10-2021-0147334 A (SKC CO., LTD.) 07 December 2021 (2021-12-07) See paragraphs [0019]-[0030], [0040]-[0042] and [0083]-[0086]; and figure 1. | 1-13 |
| A | KR 10-2002-0016866 A (BASF AKTIENGESELLSCHAFT) 06 March 2002 (2002-03-06) See claims 1-10. | 1-14 |
| A | KR 10-1989045 B1 (TLC KOREA CO., LTD.) 13 June 2019 (2019-06-13) See claims 1-7. | 1-14 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **05 June 2024** | **05 June 2024** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2024/002205** |

| C. | DOCUMENTS CONSIDERED TO BE RELEVANT | |
| --- | --- | --- |
| Category* | Citation of document, with indication, where appropriate, of the relevant passages | Relevant to claim No. |
| A | JP 2007-532699 A (EASTMAN CHEMICAL COMPANY) 15 November 2007 (2007-11-15)<br>See claims 1-41. | 1-14 |

Form PCT/ISA/210 (second sheet) (July 2022)

## INTERNATIONAL SEARCH REPORT
### Information on patent family members

| International application No. |
|---|
| **PCT/KR2024/002205** |

| Patent document cited in search report | | | Publication date (day/month/year) | Patent family member(s) | | | Publication date (day/month/year) |
|---|---|---|---|---|---|---|---|
| KR | 10-2014-0031010 | A | 12 March 2014 | CN | 104583271 | A | 29 April 2015 |
| | | | | EP | 2894182 | A1 | 15 July 2015 |
| | | | | JP | 2015-530435 | A | 15 October 2015 |
| | | | | JP | 6199392 | B2 | 20 September 2017 |
| | | | | KR | 10-1992391 | B1 | 30 September 2019 |
| | | | | TW | 201410735 | A | 16 March 2014 |
| | | | | TW | I603994 | B | 01 November 2017 |
| | | | | US | 2015-0183927 | A1 | 02 July 2015 |
| | | | | US | 9637589 | B2 | 02 May 2017 |
| | | | | WO | 2014-038774 | A1 | 13 March 2014 |
| KR | 10-2021-0147334 | A | 07 December 2021 | CN | 113736069 | A | 03 December 2021 |
| | | | | EP | 3916036 | A1 | 01 December 2021 |
| | | | | JP | 2021-188038 | A | 13 December 2021 |
| | | | | JP | 7282124 | B2 | 26 May 2023 |
| | | | | KR | 10-2021-0147332 | A | 07 December 2021 |
| | | | | KR | 10-2022-0011817 | A | 03 February 2022 |
| | | | | KR | 10-2022-0015623 | A | 08 February 2022 |
| | | | | KR | 10-2022-0063901 | A | 18 May 2022 |
| | | | | KR | 10-2410615 | B1 | 17 June 2022 |
| | | | | KR | 10-2410620 | B1 | 17 June 2022 |
| | | | | KR | 10-2421034 | B1 | 14 July 2022 |
| | | | | KR | 10-2421044 | B1 | 14 July 2022 |
| | | | | KR | 10-2527599 | B1 | 02 May 2023 |
| | | | | US | 2021-0380757 | A1 | 09 December 2021 |
| | | | | WO | 2021-241931 | A1 | 02 December 2021 |
| KR | 10-2002-0016866 | A | 06 March 2002 | AT | 275595 | T | 15 September 2004 |
| | | | | AT | E275595 | T1 | 15 September 2004 |
| | | | | AU | 2000-64281 | A1 | 31 January 2001 |
| | | | | AU | 6428100 | A | 31 January 2001 |
| | | | | BR | 0012027 | A | 19 March 2002 |
| | | | | CA | 2378649 | A1 | 04 January 2001 |
| | | | | CN | 1125106 | C | 22 October 2003 |
| | | | | CN | 1358207 | A | 10 July 2002 |
| | | | | CZ | 20014543 | A3 | 17 April 2002 |
| | | | | CZ | 295325 | B6 | 13 July 2005 |
| | | | | DE | 19929790 | A1 | 04 January 2001 |
| | | | | EP | 1189969 | A1 | 27 March 2002 |
| | | | | ES | 2225190 | T3 | 16 March 2005 |
| | | | | IL | 147025 | A | 14 August 2002 |
| | | | | JP | 2003-503567 | A | 28 January 2003 |
| | | | | JP | 3328272 | B1 | 24 September 2002 |
| | | | | KR | 10-0610299 | B1 | 09 August 2006 |
| | | | | MX | PA01012853 | A | 30 July 2002 |
| | | | | MY | 129005 | A | 30 March 2007 |
| | | | | PL | 353536 | A1 | 01 December 2003 |
| | | | | TR | 200103842 | T2 | 22 April 2002 |
| | | | | US | 6812321 | B1 | 02 November 2004 |
| | | | | WO | 01-00705 | A1 | 04 January 2001 |
| KR | 10-1989045 | B1 | 13 June 2019 | None | | | |
| JP | 2007-532699 | A | 15 November 2007 | CN | 1976970 | A | 06 June 2007 |

Form PCT/ISA/210 (patent family annex) (July 2022)

INTERNATIONAL SEARCH REPORT
Information on patent family members

International application No.

**PCT/KR2024/002205**

| Patent document cited in search report | Publication date (day/month/year) | Patent family member(s) | | Publication date (day/month/year) |
|---|---|---|---|---|
| | | EP 1725602 A2 | | 29 November 2006 |
| | | US 2005-0209374 A1 | | 22 September 2005 |
| | | WO 2005-092948 A2 | | 06 October 2005 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230023776

- KR 1020240024326